# EUROPÄISCHE PATENTSCHRIFT

(11) **EP 1 889 355 B1**
(45) Veröffentlichungstag und Bekanntmachung des Hinweises auf die Patenterteilung: **10.01.2018**
(21) Anmeldenummer: 06763544.1
(22) Anmeldetag: 07.06.2006
(51) Int. Cl.: H02P 23/14

(54) **VERFAHREN UND VORRICHTUNG ZUM STEUERN EINES BÜRSTENLOSEN GLEICHSTROMMOTORS**
METHOD AND DEVICE FOR CONTROLLING A BRUSHLESS DIRECT-CURRENT MOTOR
PROCÉDÉ ET DISPOSITIF POUR COMMANDER UN MOTEUR À COURANT CONTINU SANS BALAI

(30) Priorität: 08.06.2005 DE 102005026439
(43) Veröffentlichungstag der Anmeldung: 20.02.2008
(73) Patentinhaber: Continental Automotive GmbH, 30165 Hannover (DE)
(72) Erfinder: FERNENGEL, Mathias, 63128 Dietzenbach (DE); GROSSMANN, Reiner, 65779 Kelkheim (DE); SADER, Frank, 60487 Frankfurt am Main (DE)
(86) Internationale Anmeldenummer: PCT/EP2006/062947
(87) Internationale Veröffentlichungsnummer: WO 2006/131523

(56) Entgegenhaltungen:
- EP-A- 1 286 456
- DE-A1- 19 502 306
- JP-A- H07 212 915
- PATENT ABSTRACTS OF JAPAN Bd. 1999, Nr. 04, 30. April 1999 (1999-04-30) & JP 11 018496 A (HITACHI LTD), 22. Januar 1999 (1999-01-22)

## Beschreibung

Die Erfindung betrifft ein Verfahren und eine Vorrichtung zum Steuern eines bürstenlosen Gleichstrommotors.

Bürstenlose Gleichstrommotoren (BLDC-Motoren) sind Maschinen mit Permanentmagneten im Rotor. Der Rotor erzeugt das Erregerfeld. Der Stator des BLDC-Motors besitzt eine Drehstromwicklung und wird von einem Wechselrichter gespeist, der Drehstrom zur Verfügung stellt. BLDC-Motoren sind selbstgeführte Maschinen und benötigen einen Drehwinkellagegeber zum Betrieb. Der Ankerstrom bildet zusammen mit dem Feld des Permanentmagneten ein zeitlich möglichst konstantes Drehmoment. Die Weiterschaltung des Statorfeldes erfolgt mit Hilfe des Wechselrichters rotorstellungsabhängig beziehungsweise polradlageabhängig so, dass sich zwischen der Statordrehdurchflutung und dem Rotorfeld ein konstanter Winkel von n/2 elektrisch einstellt. Die Polradlage wird vorzugsweise über Sensoren erfasst oder aus Klemmenspannungen und/oder Klemmenströmen abgeleitet. Das Betriebsverhalten entspricht weitgehend dem des Gleichstrommotors. BLDC-Motoren haben eine sehr gute Dynamik und können einfach gesteuert werden. Die bürstenlose Technik ist verschleiß- und wartungsfrei.

BLDC-Motoren werden insbesondere für Servolenkungen in Kraftfahrzeugen eingesetzt. Servolenkungen sind Einrichtungen zur Verstärkung der Lenkkraft, die dafür ausgelegt sind, eine von dem Fahrer des Kraftfahrzeugs aufgebrachte Lenkkraft zu verstärken. Das Verstärken der Kraft erfolgt elektromechanisch mittels des BLDC-Motors. Die Servolenkung umfasst vorzugsweise einen Drehmomentsensor, der das vom Fahrer auf das Lenkrad übertragene aktuelle Drehmoment erfasst. Das Drehmoment wird dann verstärkt, wobei der Verstärkungsfaktor abhängig sein kann von verschiedenen Betriebsgrößen des Kraftfahrzeugs. Anschließend wird der BLDC-Motor entsprechend angesteuert. Der BLDC-Motor ist vorzugsweise mittels eines Getriebes mit der Lenkreinrichtung des Kraftfahrzeugs gekoppelt. Ungleichförmigkeiten des Drehmoments, das von dem BLDC-Motor abgegeben wird, werden von dem Fahrer als Ruckeln am Lenkrad wahrgenommen. Eine Gleichförmigkeit des Drehmoments ist somit wesentlich für einen hohen Fahrkomfort. Derartige Ungleichförmigkeiten des Drehmoments werden auch als Drehmomentrippel bezeichnet.

Aus der DE 199 38 678 A1 ist ein Verfahren und eine Vorrichtung zum Steuern eines BLDC-Motors bekannt, der mit Blockkommutierung der Spannung betrieben wird. Der Gleichstrommotor wird so angesteuert, dass die angelegte Spannung von den für die Blockkommutierung vorgesehenen Spannungen in Abhängigkeit von der Drehzahl des Motors und dessen Stromaufnahme abweicht. Dazu ist eine Tabelle vorgesehen aus der geänderte Pulsweiten beim Umschalten der Wicklungen des Gleichstrommotors abhängig von der Drehzahl N und Stromwerten ausgelesen werden und entsprechend angesteuert werden.

Aus der DE 101 26 470 A1 ist ein Verfahren zum Betrieb einer Lenkeinrichtung mit einer Einrichtung zur Verstärkung der Lenkkraft bekannt. Die Einrichtung zur Verstärkung der Lenkkraft ist ein elektrisch kommutierter Elektromotor, und zwar ein BLDC-Motor. Der BLDC-Motor wird stromgesteuert betrieben. Eine zu erzeugende Spannung wird abhängig von einem Sollstrom, einer Solldrehzahl und einer Temperatur des Elektromotors ermittelt.

Aus der DE 195 02 306 A1 ist eine Vorrichtung und ein Verfahren zum Steuern eines bürstenlosen Gleichstrommotors mit einem auf einem Rotor angeordneten Permanentmagneten und einem Stator mit Wicklungen, wobei die Vorrichtung ausgebildet ist zum Ermitteln einer Temperatur der Wicklungen.

Aus der JP 072 129 15 ist eine Vorrichtung und ein Verfahren zum Steuern eines bürstenlosen Gleichstrommotors mit einem auf einem Rotor angeordneten Permanentmagneten und einem Stator mit Wicklungen, wobei die Vorrichtung - ausgebildet ist zum Ermitteln einer Temperatur des Stators, - aufweist eine Einheit, welche ausgebildet ist abhängig von der Temperatur des Stators eine geschätzte Temperatur des Permanentmagneten zu ermitteln, und - die ausgebildet ist mindestens ein Stellsignal zum Steuern des Gleichstrommotors abhängig von der geschätzten Temperatur des Permanentmagneten zu ermitteln. Die Aufgabe der Erfindung ist, eine Vorrichtung und ein Verfahren zum Steuern eines BLDC-Motors zu schaffen, die ein präzises Steuern des BLDC-Motors ermöglichen.

Die Aufgabe wird gelöst durch die Merkmale der unabhängigen Patentansprüche. Vorteilhafte Ausgestaltungen der Erfindung sind in den Unteransprüchen gekennzeichnet. Die Erfindung nutzt so die Erkenntnis, dass sich die Eigenschaften des Permanentmagneten abhängig von seiner Temperatur ändern und somit ohne Berücksichtigung der Temperatur des Permanentmagneten bei gleichbleibendem Stellsignal zum Steuern des Gleichstrommotors abhängig von der Temperatur ein unterschiedliches Drehmoment erzeugt wird. Darüber hinaus ermöglicht sie ein sehr einfaches Ermitteln der Temperatur des Permanentmagneten, da die Temperatur der Wicklungen einfach im Gegensatz zur Temperatur des Permanentmagneten erfassbar ist. Das zu erzeugende Drehmoment kann somit sehr präzise eingestellt werden ohne zusätzliche Sensoren vorsehen zu müssen.

Der Erfindung liegt ferner die Erkenntnis zugrunde, dass insbesondere bei einem Kurzzeitbetrieb des bürstenlosen Gleichstrommotors signifikante Temperaturunterschiede zwischen dem Stator und dem Rotor auftreten können. Diese Temperaturunterschiede haben Einfluss auf das Drehmomentenverhalten, so ändern sich Amplitude und Verlauf des Moments. Der Einfluss der Temperatur des Permanentmagneten kann so den Einfluss der Wicklungstemperatur auf das erzeugte Drehmoment deutlich übersteigen.

Gemäß einer vorteilhaften Ausgestaltung der Erfindung umfasst der Beobachter ein PT1-Glied. Auf diese Weise kann die geschätzte Temperatur des Permanentmagneten besonders einfach und dennoch präzise ermittelt werden.

In diesem Zusammenhang ist es vorteilhaft, wenn mindestens ein Parameter des PT1-Gliedes abhängt von mindestens einer Lastgröße des Gleichstrommotors. Auf diese Weise kann über im wesentlichen den gesamten Lastbereich des Gleichstrommotors ein sehr präzises Steuern einfach gewährleistet werden unabhängig von Temperaturschwankungen des Permanentmagneten.

In diesem Zusammenhang ist es besonders vorteilhaft, wenn die Lastgröße die Drehzahl des Gleichstrommotors oder der Strom durch die Wicklungen ist. Diese sind sehr einfach ermittelbar und repräsentieren das lastabhängige Verhalten des Gleichstrommotors sehr gut.

Gemäß einer weiteren vorteilhaften Ausgestaltung der Erfindung ist ein weiterer Beobachter vorgesehen, der ausgebildet ist zum Ermitteln einer geschätzten Starttemperatur des Permanentmagneten bei einem Einschalten des Gleichstrommotors abhängig von einer Zeitdauer seit dem letzten Ausschalten des Gleichstrommotors. So kann die geschätzte Temperatur des Permanentmagneten insbesondere bei einer relativ kurzen Zeitdauer seit dem letzten Ausschalten des Gleichstrommotors sehr zeitnah zum erneuten Einschalten des Gleichstrommotors mit hoher Güte ermittelt werden und somit sehr schnell ein präzises Einstellen des Drehmoments gewährleistet werden.

Gemäß einer weiteren vorteilhaften Ausgestaltung der Erfindung ist es vorgesehen, die Wicklungstemperatur abhängig von dem Strom durch die Wicklungen zu ermitteln. Dies hat den Vorteil, dass ohne den Einsatz eines zusätzlichen Sensors die Wicklungstemperatur ermittelt werden kann.

Ausführungsbeispiele der Erfindung werden im Folgenden anhand der schematischen Zeichnungen erläutert. Es zeigen:

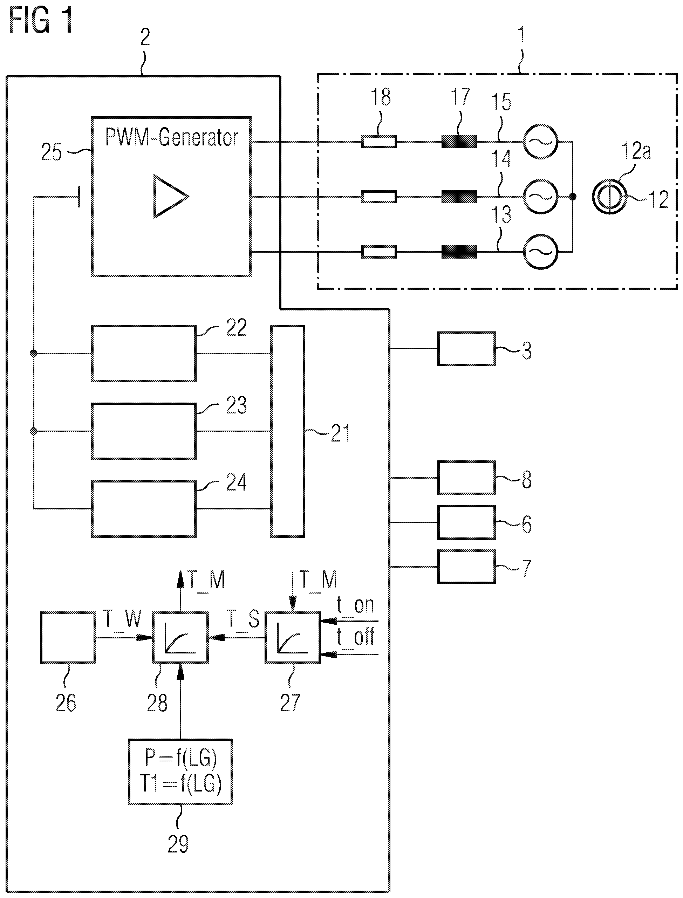

Figur 1 einen BLDC-Motor 1 und eine Vorrichtung 2 zum Steuern des BLDC-Motors,
Figur 2 ein Ablaufdiagramm eines Programms zum Steuern des BLDC-Motors gemäß Figur 1.

Elemente gleicher Konstruktion und Funktion sind figurenübergreifend mit den gleichen Bezugszeichen versehen.

Der BLDC-Motor 1 umfasst einen permanent erregten Rotor 12 und einen Stator, der vorzugsweise drei Stränge 13, 14, 15 aufweist, wobei die an diesen Strängen anliegende Last jeweils durch eine Induktivität 17 und einen Widerstand 18 darstellbar ist. Die drei Stränge 13-15 sind vorzugsweise in Sternschaltung geschaltet. Auf dem Rotor 12 ist ein oder mehrere Permanentmagnete 12a angeordnet.

Eine Vorrichtung 2 zum Steuern des BLDC-Motors 1 hat eine Entscheidungseinheit 21, erste bis dritte Steuereinheiten 22 bis 24 und einen Pulsweitenmodulations-Generator 25.

Die Entscheidungseinheit 21 entscheidet abhängig von ihr zugeführten Betriebsgrößen, wie beispielsweise der Drehzahl N, mit der der BLDC-Motor 1 betrieben werden soll, oder auch des Drehmoments TQ, das von dem BLDC-Motor abgegeben werden soll, in welchem Steuermodus CTRL der BLDC-Motor betrieben werden soll. Der Steuereinheit 2 kann dafür beispielsweise ein Drehmomentsensor 7 zugeordnet sein, welcher das von einem Fahrer des Kraftfahrzeugs, in dem der BLDC-Motor bevorzugt eingebaut ist, erzeugte Drehmoment an einer mit dem Lenkrad gekoppelten Stange erfasst. Abhängig von diesem Drehmoment und ggf. weiteren Betriebsgrößen des Kraftfahrzeugs wird dann das durch den BLDC-Motor aufzubringende Drehmoment TQ ermittelt.

Der Vorrichtung 2 zum Steuern des BLDC-Motors 1 ist ferner ein Lagesensor 3 zugeordnet, der die Winkelstellung des Rotors 12 erfasst. Abhängig von dem zeitlichen Verlauf der erfassten Winkelstellung kann dann auch die Drehzahl N ermittelt werden. Der Lagesensor 3 kann als Hallsensor, als magnetoresistiver Sensor, als optischer Sensor oder als ein so genannter Resolver ausgebildet sein.

Die Entscheidungseinheit 21 entscheidet, welche der Steuereinheiten 22 bis 24 ein Stellsignal für einen Pulsweitenmodulationsgenerator 25 erzeugen. Diese Entscheidung erfolgt abhängig von dem zu steuernden Steuermodus CTRL. Ist der Steuermodus CTRL der des Einprägens eines sinus- oder trapezförmigen Stroms SINTRAP , so erzeugt die erste Steuereinheit 22 das Stellsignal. Ist hingegen der Steuermodus CTRL der Übergangsbetrieb TRANS, so erzeugt die zweite Steuereinheit 23 das Stellsignal. Ist der Steuermoduls CTRL die Blockkommutierung BLOCK, so erzeugt die dritte Steuereinheit 24 das Stellsignal.

Der Pulsweitenmodulations-Generator 25 erzeugt Spannungssignale, die mittels einer dem Pulsweitenmodulations-Generator 25 zugeordneten Brückenschaltung den jeweiligen Strängen 13, 14, 15 des BLDC-Motors 1 eingeprägt werden.

Es ist auch möglich zwei Stromsensoren 6, 8 vorzusehen, welche jeweils den Strom in einem Strang 13 bis 15 erfassen.

Die Vorrichtung 2 zum Steuern des BLDC-Motors 1 umfasst ferner eine Wicklungstemperatur-Einheit 26, die ausgebildet ist zum Ermitteln einer Temperatur T_W der Wicklungen der Stränge 13 bis 15. Bevorzugt ist dazu in thermischer Kopplung mit den Wicklungen oder zumindest einer Wicklung ein Temperatursensor, wie beispielsweise ein NTC-Widerstand, vorgesehen. Alternativ kann die Temperatur T_W der Wicklungen abhängig von dem jeweiligen erfassten Strom durch die Stränge 13 bis 15 ermittelt werden. In diesem Zusammenhang wird bevorzugt die Erkenntnis genutzt, dass der Spannungsabfall über den Wicklungen gut modellierbar ist und so aufgrund der bekannten Temperaturabhängigkeit des ohmschen Widerstandes der Wicklungen die Temperatur T_W der Wicklungen einfach ermittelbar ist. Besonders einfach kann so das Ermitteln der Temperatur T_W der Wicklungen erfolgen in Betriebszuständen, in denen der induktive Spannungsabfall der Wicklungen vernachlässigbar ist.

Ferner ist ein erster Beobachter 27 vorgesehen, der ausgebildet ist zum Ermitteln einer geschätzten Starttemperatur T_S des Permanentmagneten 12a bei einem Einschalten des Gleichstrommotors abhängig von den Zeitpunkten t_off, t_on des letztmaligen Ausschaltens beziehungsweise des aktuellen Einschaltens des BLDC-Motors 1. Der erste Beobachter umfasst bevorzugt ein Filter, das das Abkühlverhalten des Permanentmagneten nach dem Ausschalten des Gleichstrommotors repräsentiert. Die Parameter dieses Filters können empirisch durch Versuche mit dem BLDC-Motor 1 ermittelt sein und sind bevorzugt in einem Datenspeicher der Vorrichtung 2 zum Steuern des BLDC-Motors 1 gespeichert. Das Filter kann beispielsweise als PT1-Filter aber auch als ein geeignet anderes Filter ausgebildet sein.

Ferner ist ein zweiter Beobachter 28 vorgesehen, der ausgebildet ist abhängig von der Temperatur T_W der Wicklungen eine geschätzte Temperatur T_M des Permanentmagneten 12a zu ermitteln. Dazu umfasst er bevorzugt ebenfalls ein Filter, dessen Parameter in einer einfachen Ausführungsform fest vorgegeben sein können, bevorzugt jedoch in einer Parametereinheit 29 abhängig von mindestens einer Lastgröße LG des BLDC-Motors ermittelt werden. Dies erfolgt bevorzugt mittels einer Kennlinie oder einem Kennfeld abhängig von der mindestens einen Kenngröße. Die Kennlinie oder Kennlinien oder Kennfeld oder Kennfelder sind bevorzugt vorab durch Versuche oder Simulationen ermittelt und in dem Datenspeicher der Vorrichtung 2 zum Steuern des BLDC-Motors 1 gespeichert.

Das Filter des zweiten Beobachters ist bevorzugt ein PT1-Filter und somit ein PT1-Glied, mit einem Proportionalparameter P und einem Verzögerungsparameter T1. Die Lastgröße ist bevorzugt die Drehzahl des Rotors 12 des BLDC-Motors und/oder der Strom durch die Wicklungen des BLDC-Motors. Sie kann jedoch auch eine beliebige andere Lastgröße LG des BLDC-Motors sein.

Das Filter des zweiten Beobachters 28 ist ausgebildet zum Filtern der Temperatur T_W der Wicklungen und so zum Ermitteln der geschätzten Temperatur T_M des Permanentmagneten 12a. Da insbesondere nach einem kurzzeitigen Ausschalten des BLDC-Motors die Temperatur des Permanentmagneten 12a von der Temperatur der Wicklungen signifikant abweichen kann, wird die Starttemperatur T_S des Permanentmagneten bevorzugt geeignet bei Ermitteln der geschätzten Temperatur T_M des Permanentmagneten 12a berücksichtigt. So wird bevorzugt dem Filter des zweiten Beobachters 28 dann als Startwert nach dem kurzzeitigen Ausschalten zunächst die Starttemperatur T_S des Permantmagneten statt der Temperatur T_W der Wicklungen zugeführt.

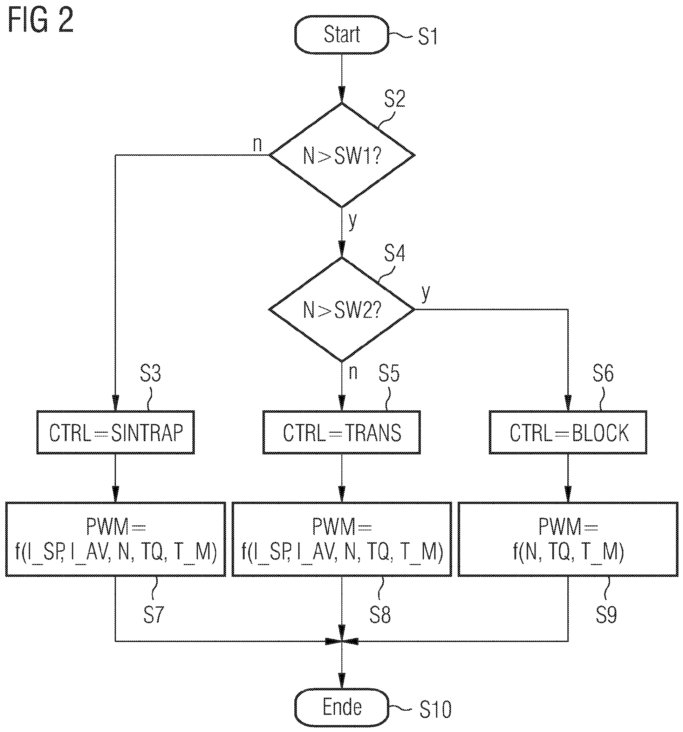

Ein Programm zum Steuern des BLDC-Motors 1 ist in der Vorrichtung 2 zum Steuern des BLDC-Motors 1 gespeichert und wird während des Betriebs des BLDC-Motors 1 abgearbeitet. Das Programm (Figur 2) wird in einem Schritt S1 gestartet, in dem gegebenenfalls Variablen initialisiert werden.

In einem Schritt S2 wird geprüft, ob die Drehzahl N, mit der der BLDC-Motor 1 betrieben werden soll, größer ist als ein erster Schwellenwert SW1. Der erste Schwellenwert SW1 wird vorzugsweise in etwa entsprechend 1/3 der Leerlaufdrehzahl des BLDC-Motors 1 gewählt. Ist die Bedingung des Schrittes S2 nicht erfüllt, so wird in einem Schritt S3 der Betriebsmodus CTRL des Einprägens des sinus- oder trapezförmigen Stroms SINTRAP gesteuert.

In einem Schritt S7 wird dann ein Stellsignal PWM für den Pulsweitenmodulations-Generator 25 erzeugt. Dies erfolgt abhängig von einem Sollwert I_SP des Stroms in dem jeweiligen Strang 13 bis 15 und der geschätzten Temperatur T_M des Permanentmagneten. Alternativ dazu kann der Sollwert I_SP des Stroms auch abhängig von der geschätzten Temperatur T_M des Permanentmagneten ermittelt werden. Der Sollwert I_SP des Stroms wird abhängig von dem Drehmoment, das der BLDC-Motor 1 abgeben soll und gegebenenfalls zusätzlich abhängig von der Drehzahl N, mit der der BLDC-Motor 1 betrieben werden soll, ermittelt. Bevorzugt ist ein Modell des BLDC-Motors vorhanden, mittels dessen abhängig von dem Sollwert I_SP des Stroms oder dessen sinus- oder trapezförmigen Verlaufs das Stellsignal PWM ermittelt wird. Das Modell ist bevorzugt durch Versuche mit dem BLDC-Motor 1 oder durch Simulationen ermittelt und fest in der Vorrichtung 2 zum Steuern des BLDC-Motors 1 gespeichert.

Durch das Einprägen des sinus- oder trapezförmigen Stroms in den Strängen 13 bis 15 wird bei niedrigeren Drehzahlen N, also Drehzahlen N, die niedriger sind als der erste Schwellenwert SW1 ein besonders gleichförmiges Drehmoment von dem BLDC-Motor 1 erzeugt.

Alternativ oder zusätzlich kann der Strom auch geregelt werden, wenn entsprechende Stromsensoren 6, 8 vorgesehen sind. In diesem Fall wird dann das Stellsignal PWM für den Pulsweitenmodulations-Generator 25 abhängig von der Differenz des Sollwertes I_SP und eines Istwertes I_AV des Stroms in den jeweiligen Strängen 13 - 15 ermittelt. Dadurch kann der Stromverlauf in den Strängen 13-15 noch präziser eingestellt werden, wenn die Stromsensoren den Istwert I_AV des Stroms genau erfassen.

Ist die Bedingung des Schrittes S2 hingegen erfüllt, d.h. die Drehzahl N, mit der der BLDC-Motor 1 betrieben werden soll, ist größer als der erste Schwellenwert SW1, so wird in einem Schritt S4 geprüft, ob die Drehzahl N, mit der der BLDC-Motor 1 betrieben werden soll, größer ist als ein zweiter Schwellenwert SW2.

Ist die Bedingung des Schrittes S4 erfüllt, so wird in einem Schritt S6 als Steuermodus CTRL der Betrieb mit Blockkommutierung BLOCK der Spannung vorgegeben.

In einem Schritt S9 wird das Stellsignal PWM für den Pulsweitenmodulations-Generator 25 abhängig von der Drehzahl N und der geschätzten Temperatur T_M des Permanentmagneten T_M und/ oder dem Drehmoment TQ und der geschätzten Temperatur T_M des Permanentmagneten T_M erzeugt, das von dem BLDC-Motor 1 abgegeben werden soll. Es wird eine Blockkommutierung BLOCK gesteuert. Im Rahmen der Blockkommutierung BLOCK können den jeweiligen Strängen 13-15 Spannungsblöcke von 120 Grad mit 60 Grad Lücke oder Spannungsblöcke von 180 Grad eingeprägt werden abhängig von und der geschätzten Temperatur T_M des Permanentmagneten T_M und der Drehzahl N, mit der der BLDC-Motor 1 betrieben werden soll, oder und der geschätzten Temperatur T_M des Permanentmagneten T_M und dem Drehmoment TQ, mit dem der BLDC-Motor 1 betrieben werden soll.

Die Höhe der Spannung, mit der die einzelnen Stränge 13-15 im Steuermodus CTRL der Blockkommutierung BLOCK beaufschlagt werden, kann zudem mittels der Pulsweitenmodulation abhängig von der Drehzahl N und/oder dem Drehmoment TQ eingestellt werden, das der BLDC-Motor 1 erzeugen soll.

Im Steuermodus CTRL der Blockkommutierung BLOCK wird der BLDC-Motor 1 mit einem hohen Wirkungsgrad betrieben, der bis cirka 25% höher ist, als der im Steuermodus CTRL des Einprägens eines sinus- oder trapezförmigen Stroms SINTRAP. So kann auch ein kompakt ausgebildeter BLDC-Motor 1 auch bei hohen Drehzahlen N und hohen Drehmomenten TQ betrieben werden. Dadurch, dass der Steuermodus CTRL der Blockkommutierung BLOCK lediglich eingenommen wird, wenn die Drehzahl N größer ist als der zweiten Schwellenwert SW2, der bevorzugt bei 2/3 der Leerlaufdrehzahl N des BLDC-Motors 1 liegt, ist gewährleistet, dass während des Steuermodus CTRL der Blockkommutierung BLOCK die Drehmomentungleichförmigkeit sehr gering ist.

In einem Schritt S10 wird das Programm dann beendet. Das Programm gemäß Figur 2 wird vorzugsweise nach einer vorgebbaren Zeitdauer erneut abgearbeitet.

Ist die Bedingung des Schrittes S4 nicht erfüllt, so wird ein Steuermodus CTRL des Übergangsbetriebs TRANS gesteuert.

In einem Schritt S8 wird das Stellsignal PWM für den Pulsweitenmodulations-Generator 25 abhängig von der geschätzten Temperatur T_M des Permanentmagneten T_M und der Drehzahl N, mit der der BLDC-Motor 1 betrieben werden soll, und der geschätzten Temperatur T_M des Permanentmagneten T_M und dem Drehmoment TQ, das von dem BLDC-Motor 1 erzeugt werden soll, und abhängig von dem Sollwert I_SP und gegebenenfalls dem Istwert I_AV des Stroms in dem jeweiligen Strang 13 bis 15 eingestellt. Mit steigender Drehzahl erfolgt hier gleitend ein Übergang von dem Einprägen des sinus- oder trapezförmigen Stroms SINTRAP hin zu der Blockkommutierung BLOCK der Spannung. Die Ansteuerung in dem Übergangsbereich erfolgt dabei abhängig von abgelegten Informationen, die durch Versuche mit dem BLDC-Motor vorab ermittelt wurden.

In einer besonders einfachen Ausgestaltung der Vorrichtung 2 zum Steuern des BLDC-Motors 1 wird entweder der Steuermodus CTRL der Regelung SIN auf sinusförmigen Strom oder der Blockkommutierung BLOCK eingenommen. Die Entscheidung welcher Steuermodus CTRL eingenommen werden soll erfolgt dann abhängig von nur einem Schwellenwert der Drehzahl N, der dann bevorzugt in etwa bei der halben Leerlaufdrehzahl liegt.

## Patentansprüche

1. Vorrichtung zum Steuern eines bürstenlosen Gleichstrommotors (1) mit einem auf einem Rotor (12) angeordneten Permanentmagneten (12a) und einem Stator mit Wicklungen, wobei die Vorrichtung
- ausgebildet ist zum Ermitteln einer Temperatur (T_W) der Wicklungen, **dadurch gekennzeichnet, dass** die Vorrichtung einen Beobachter (28) aufweist, der ausgebildet ist abhängig von der Temperatur (T_W) der Wicklungen eine geschätzte Temperatur (T_M) des Permanentmagneten (12a) zu ermitteln, und
- die ausgebildet ist mindestens ein Stellsignal zum Steuern des Gleichstrommotors (1) abhängig von der geschätzten Temperatur (T_M) des Permanentmagneten (12a) zu ermitteln.

2. Vorrichtung nach Anspruch 1,
bei der der Beobachter (28) ein PT1-Glied umfasst.

3. Vorrichtung nach Anspruch 2,
bei der mindestens ein Parameter des PT1-Glieds abhängt von mindestens einer Lastgröße (LG) des Gleichstrommotors (1).

4. Vorrichtung nach Anspruch 3,
bei der die mindestens eine Lastgröße (LG) die Drehzahl und/oder der Strom durch die Wicklungen ist.

5. Vorrichtung nach einem der vorstehenden Ansprüche,
bei der ein weiterer Beobachter (27) vorgesehen ist, der ausgebildet ist zum Ermitteln einer geschätzten Starttemperatur (T_S) des Permanentmagneten (12a) bei einem Einschalten des Gleichstrommotors (1) abhängig von einer Zeitdauer seit dem letzten Ausschalten des Gleichstrommotors (1).

6. Vorrichtung nach einem der vorstehenden Ansprüche,
die ausgebildet ist zum Ermitteln der Temperatur T_W der Wicklungen abhängig von dem Strom durch die Wicklungen.

7. Verfahren zum Steuern eines bürstenlosen Gleichstrommotors (1) mit einem auf einem Rotor (12) angeordneten Permanentmagneten (12a) und einem Stator mit Wicklungen, bei dem
- eine Temperatur (T_W) der Wicklungen ermittelt wird, **dadurch gekennzeichnet, dass**
- mittels eines Beobachters (28) abhängig von der Temperatur (T_W) der Wicklungen eine geschätzte Temperatur (T_M) des Permanentmagneten (12a) ermittelt wird, und
- mindestens ein Stellsignal zum Steuern des Gleichstrommotors (1) abhängig von der geschätzten Temperatur (T_M) des Permanentmagneten (12a) ermittelt wird.

## Claims

1. Apparatus for controlling a brushless DC motor (1) with a permanent magnet (12a) arranged on a rotor (12) and a stator with windings, the apparatus
- being designed to determine a temperature (T_W) of the windings,
**characterized in that** the apparatus has an observer (28), which is designed to determine an estimated temperature (T_M) of the permanent magnet (12a) as a function of the temperature (T_W) of the windings, and
- which is designed to determine at least one actuating signal for controlling the DC motor (1) as a function of the estimated temperature (T_M) of the permanent magnet (12a).

2. Apparatus according to Claim 1, in which the observer (28) comprises a PT1 element.

3. Apparatus according to Claim 2, in which at least one parameter of the PT1 element is dependent on at least one load variable (LG) of the DC motor (1).

4. Apparatus according to Claim 3, in which the at least one load variable (LG) is the rotation speed and/or the current through the windings.

5. Apparatus according to one of the preceding claims, in which a further observer (27) is provided which is designed to determine an estimated start temperature (T_S) of the permanent magnet (12a) when the DC motor (1) is switched on as a function of a time period since the last time the DC motor (1) was switched off.

6. Apparatus according to one of the preceding claims, which is designed to determine the temperature (T_W) of the windings as a function of the current through the windings.

7. Method for controlling a brushless DC motor (1) with a permanent magnet (12a) arranged on a rotor (12) and a stator with windings, in which
- a temperature (T_W) of the windings is determined, **characterized in that**
- an estimated temperature (T_M) of the permanent magnet (12a) is determined by means of an observer (28) as a function of the temperature (T_W) of the windings, and
- at least one actuating signal is determined for controlling the DC motor (1) as a function of the estimated temperature (T_M) of the permanent magnet (12a).

## Revendications

1. Dispositif destiné à commander un moteur à courant continu sans balai (1) comportant un aimant permanent (12a) disposé sur un rotor (12) et un stator muni d'enroulements, dans lequel le dispositif
- est conçu pour déterminer une température (T_W) des enroulements,
**caractérisé en ce que** le dispositif comporte un observateur (28) qui est conçu pour déterminer une température estimée (T_M) de l'aimant permanent (12a) en fonction de la température (T_W) des enroulements, et
- qui est conçu pour déterminer au moins un signal de réglage destiné à commander le moteur à courant continu (1) en fonction de la température estimée (T_M) de l'aimant permanent (12a).

2. Dispositif selon la revendication 1, dans lequel l'observateur (28) comprend un élément PT1.

3. Dispositif selon la revendication 2, dans lequel au moins un paramètre de l'élément PT1 dépend d'au moins une grandeur de charge (LG) du moteur à courant continu (1).

4. Dispositif selon la revendication 3, dans lequel l'au moins une grandeur de charge (LG) est la vitesse de rotation et/ou le courant passant dans les enroulements.

5. Dispositif selon l'une quelconque des revendications précédentes, dans lequel il est prévu un autre observateur (27) qui est conçu pour déterminer une température estimée de démarrage (T_S) de l'aimant permanent (12a) lors d'une activation du moteur à courant continu (1) en fonction d'une période de temps s'étant écoulée depuis la dernière désactivation du moteur à courant continu (1).

6. Dispositif selon l'une quelconque des revendications précédentes, qui est conçu pour déterminer la température T_W des enroulements en fonction du courant passant dans les enroulements.

7. Procédé destiné à commander un moteur à courant continu sans balai (1) comportant un aimant permanent (12a) disposé sur un rotor (12) et un stator muni d'enroulements, dans lequel
- une température (T_W) des enroulements est déterminée, **caractérisé en ce qu'**une température estimée (T_M) de l'aimant permanent (12a) est déterminée au moyen d'un observateur (28) en fonction de la température (T_W) des enroulements, et
- au moins un signal de réglage destiné à commander le moteur à courant continu (1) est déterminé en fonction de la température estimée (T_M) de l'aimant permanent (12a).
